# FASCICULE DE BREVET EUROPEEN

(11) **EP 3 921 473 B1**
(45) Date de publication et mention de la délivrance du brevet: **05.04.2023**
(21) Numéro de dépôt: 20707722.3
(22) Date de dépôt: 03.02.2020
(51) Int. Cl.: E01H 1/08

(54) **EQUIPEMENT DE SOUFFLEUR POURVU D'UN HARNAIS DE PORTAGE AU DOS**
MIT EINEM GESCHIRR ZUM TRAGEN AUF DEM RÜCKEN AUSGESTATTETES GEBLÄSE
BLOWER APPLIANCE PROVIDED WITH A HARNESS FOR CARRYING ON THE BACK

(30) Priorité: 07.02.2019 FR 1901205
(43) Date de publication de la demande: 15.12.2021
(73) Titulaire: PELLENC, 84120 Pertuis (FR)
(72) Inventeur: REMY, Thibault, 84240 PEYPIN D'AIGUES (FR)
(74) Mandataire: Weber, Etienne Nicolas
(86) Numéro de dépôt international: PCT/FR2020/050171
(87) Numéro de publication internationale: WO 2020/161421

(56) Documents cités:
- EP-A1- 3 225 099
- WO-A1-2017/118276
- WO-A1-2018/176295
- CN-A- 106 192 836

## Description

### Domaine technique

La présente invention concerne un équipement de souffleur pourvu d'un hamais de portage au dos.

Les souffleurs sont utilisés pour le balayage de feuilles, de débris végétaux ou de neige, au moyen d'un flux d'air.

Le hamaís de portage au dos permet de reporter tout ou partie du poids et/ ou des contraintes de rappel du souffleur sur le dos, les épaules et les hanches d'un porteur.

Le souffleur peut être un souffleur à moteur thermique ou un souffleur à moteur électríque.

L'invention trouve des applications dans le domaine de l'entretien des espaces privés ou publics ainsi que des parcs et jardins.

### Etat de la technique antérieure

Des souffleurs pourvus d'un hamais de portage au dos sont connus, par exemple, par les documents suivants :
- WO2017/118276 - CN106105798
- US2016/0208449
- US2016/0345714
- WO2016/188410
- CN106192836, qui divulgue un équipement de souffleur conforme au préambule de la revendication 1.

Les documents ci-dessus, et en particulier les deux premiers documents, montrent un équipement de souffleur avec un hamais comprenant une armature de portage au dos avec une plage d'appui dorsale, des bretelles de portages et/ou une ceinture de portage.

L'armature de portage constitue un support recevant un ventilateur actionné par un moteur électrique ainsi qu'une ou plusieurs batteries pour l'alimentation électrique du moteur. La ou les batteries sont positionnées de façon centrale sur l'armature de portage à dos et donc sensiblement axées sur la colonne vertébrale d'un porteur équipé de cette armature de portage à dos. Le moteur est porté par l'armature de portage à dos soít directement au niveau du dos d'un porteur (par exemple, figure 1 de WO2017118276) ou latéralement au niveau d'un bras du porteur (par exemple, figure 1 de CN106192836). Dans ce dernier cas, il peut être monté avec une liberté de pivotement relativement à l'armature de portage à dos.

Le souffleur est pourvu d'une tuyère positionnée latéralement au niveau d'un bras du porteur et reliée au ventilateur soit de manière rigide (exemple du souffleur de WO2017118276), soit par l'intermédiaire d'un soufflet élastique (exemple du souffleur de CN106192836). La tuyère constitue l'extrémité libre d'une conduite d'air partant du ventilateur.

Lorsque la conduite d'air du souffleur comporte un soufflet élastique entre la tuyère et le ventilateur, un porteur saisissant la tuyère peut orienter le jet d'air en sortie de tuyère par un simple mouvement du bras tenant une poignée de la tuyère, tout en limitant les mouvements du reste de son corps.

### Exposé de l'invention

L'invention procéde de la mise en évidence d'un certain nombre de constraintes et difficultés rencontrées avec les souffleurs portés au dos connus.

De teis souffleurs sont conçus pour fournir des flux d'air pouvant générer des poussées supérieures à 20 Newton nécessitant de puissants ventilateurs. Ces souffleurs sont lourds et volumineux, d'une masse entre 8 et 15kg selon la puissance et l'énergie électrique ou thermique embarquée. Il n'est ainsi pas concevable de les porter et les orienter dynamiquement par une seule main d'un porteur pour une utilisation sur plusieurs heures de travail. Les souffleurs portés à main générent effectivement des poussées inférieures à 20 Newton pour une masse entre 3 et 5 kg, qui est la limite tout juste acceptable pour les utiliser dans cette configuration.

L'énergie développée durant une journée, voire même une matinée de travail est importante et nécessite des batteries lourdes dans le cas d'un moteur électrique.

Une augmentation de la capacité des batteries électriques alimentat les moteurs électriques des souffleurs permet la fabrication de souffleurs de puissance toujours plus élevée. En particuller la puissance d'un moteur électrique équipant le ventilateur d'un souffleur peut dépasser le kiloWatt. Une énergie de 1kWh peut être fournie à partir d'une batterie de technologie Li-Ion mais celle-ci représente une masse à porter de l'ordre de 6 kg. Compte tenu de l'utilisation discontinue d'un tel souffleur, une autonomie de plusieurs heures est envisageable dans ce cas.

Le flux d'air de grande poussée d'un tel souffleur engendre des forces de réaction importantes. La poussée se matérialise en sortie de tuyère selon l'axe de sortie de la tuyère et les forces de réaction associées doivent être contenues par le porteur du souffleur au travers de sa main conduisant la tuyère et sur son corps par l'intermédiaire de l'armature de portage à dos. Aussi une mauvaise canalisation des forces peut conduire à un inconfort de la conduite du souffleur, et nuire à son utilisation sur des périodes prolongées.

Il faut rappeler que la tuyère du souffleur est manœuvrée en permanence par un bras du porteur pour diriger judicieusement la poussée du flux d'air sur la zone de travail. La puissance du flux d'air peut être constamment adaptée par le porteur au moyen d'un dispositif de commande discret ou progressif pour l'adapter de façon dynamique aux conditions de travail rencontrées, en cours d'utilisation.

Or, la tuyère est reliée par un conduit d'air au ventilateur. Ce conduit d'air peut comporter des parties flexibles comme un soufflet élastique mais aussi des parties rigídes et le cas échéant pivotantes autour de l'axe du conduit. Ces caractéristiques permettent de faciliter l'orientation de la tuyère par le porteur.

Le souffleur peut comporter par ailleurs une articulation, reliant par exemple le ventilateur à l'armature de portage au dos.

Dans ce demier cas, les changements d'orientation de la tuyère en utilisation génèrent un couple d'efforts au niveau de l'articulation en réaction à la poussée. La valeur de ce couple est fonction de l'effort de poussée et du bras de levier entre la direction de poussée en sortie de tuyère et l'axe de l'articulation. Hormis les cas très singuliers où il a une valeurs nulie quand l'axe de poussée coupe l'axe d'articulation ou que la poussée est nulle, le souffleur a tendance à pivoter autour de son articulation entrainant une fatigue et une imprécision dans le guidage de la tuyère du fait de la compensation des efforts par la main du porteur.

Enfin, du falt de la présence de masses disposées latéralement sur l'armature de protage à dos, le centre de gravité de l'ensemble porté à dos n'est pas centré sur la colonne vertébrale du porteur et contribue à un déséquilibre des forces renforcé lors de l'utilisation du souffleur.

Afin d'obvier aux difficultés mentionnées ci-dessus, et améliorer le confort de portage d'un souffleur, l'invention propose un équipement de souffleur comprenant :
- un hamais de portage pourvu d'une armature de portage avec une plage d'appui dorsale agencée selon un plan dorsal, le plan dorsal s'étendant de manière adjacente au dos d'un porteur lorsque le hamais est porté au dos dans une position d'utillsation de l'équipement de souffleur,
- au moins une fixation de souffleur latérale,
- un souffleur solidaire de l'armature de portage par l'intermédiaire de la fixation de souffleur, et comprenant un corps de ventilateur avec une sortie d'air agencée selon un axe de sortie d'air, le souffleur comportant une tuyère, connectés en aval de la sortie d'air par l'intermédiaire d'un soufflet élastique à effet de rappel, le soufflet élastique présentant une composante de rappel, parallèlement à un axe spinal, avec une première raideur de rappel spinale, l'axe spinal étant défini à une intersection du plan dorsal et d'un plan spinal, perpendiculaire au plan dorsal et passant par la colonne vertébrale d'un porteur lorsque le hamais est porté au dos dans la position d'utilisation,
et dans lequel :
- la fixation de souffleur comprend une articulation à effet de rappel, tendant à ramener l'axe de sortie d'air de la sortie d'air du corps de ventilateur vers une position de repos, l'articulation présentant une composante de rappel, parallèlement à l'axe spinal, avec une deuxième raideur de rappel spinale, la deuxième raideur de rappel spinale étant supérieure à la première raideur de rappel spinale.

Dans la suite de la description, et en se référant à une position usuelle d'utilisation de l'équipement de souffleur, on considère que le plan dorsal et le plan spinal sont des plans sensiblement verticaux et perpendiculaires l'un à l'autre. De même l'axe spinal est considéré comme un axe sensiblement vertical défini par l'intersection du plan dorsal et du plan spinal. Ainsi, on considère encore que le soufflet présente une composante de rappel, parallèlement à l'axe spinal, lorsqu'il permet d'exercer sur la tuyère un couple de rappel autour d'au moins un axe parallèle à l'axe spinal, c'est-à-dire un couple de rappel à l'encontre de déflexions horizontales de la tuyère de part et d'autre d'une position de repos.

Ainsi, on considère encore que le soufflet présente une composante de rappel, parallèlement à l'axe spinal, lorsqu'il permet d'exercer sur la tuyère un couple de rappel autour d'au moins un axe parallèls à l'axe spinal, c'est-à-dire un couple de rappel à l'encontre de déflexions horizontales de la tuyère de part et d'autre d'une position de repos.

La tuyère peut présenter une extrémité proximale fixée au soufflet et une extremité distale libre, l'extremité proximale étant pourvue d'une poignée. Le porteur peut orienter la tuyère, et en particulier son extrémité libre, en tenant la poignée avec sa main sur le côté où est porté le souffleur. Le flux d'air produit par un ventilateur du corps de ventilateur sort par l'extrémité libre de la tuyère.

Le ventilateur est actionné par un moteur du corps de ventilateur. Il peut s'agir éventuellement d'un moteur thermique, ou de préférence d'un moteur électrique.

La position de repos est considérée comme la position occupée par la tuyère lorsque le porteur se tient debout sans exercer de force intentionnelle sur la tuyère, c'est-à-dire, en particulier, lorsqu'il ne tient pas la poignée. La poignée peut être prévue avec une possibilité de réglage le long de l'extrémité proximale de la tuyère de façon qu'en position de repos du souffleur, le porteur peut saisir la poignée tout en gardant son bras le long du corps

L'effet de rappel du soufflet élastique peut être un effet de rappel tendant à aligner l'axe de tuyère avec l'axe de sortie d'air du corps de ventilateur lorsque le soufflet élastique se présente sous la forme d'un manchon élastique drlt

Il convient de noter que le soufflet élastique peut également présenter une raideur coxale susceptible d'exercer un couple de rappel selon au moins un axe coxal, perpendiculaire à l'axe spinal, c'est-à-dire un couple de rappel à l'encontre de déflexions vericales de la tuyère par rapport à une position de repos.

De la même façon que le soufflet élastique, l'articulation del a fixation de souffleur est également susceptible d'exercer un couple de rappel présentant une composante de rappel parallélement à l'axe spinal, c'est à dire à l'encontre de déflexions horizontales.

Comme la deuxième raideur de rappel spinale est supérieure à la première raideur de rappel spinale, le corps de souffleur a tendance à rester essentiellement proche de sa position de repos lors de mouvements de la tuyère présentant de falbles amplitudes, ou à accompagner les mouvements de la tuyère lorsqu'elle est manœuvrée avec des amplitudes de déflexion importantes, avec toutefois une amplitude de déflexion moindre que la tuyère. Cette caractéristique a pour effet de garantir un bon report des forces de réaction générées par le flux d'air vers l'armature de portage. Elle a pour effet aussi d'adapter la position de repos du corps du ventilateur à un porteur et à sa corpulence sans nécessiter de réglages du portage en cours d'utilisation du souffleur. Le soufflet du conduit d'air peut ainsi être positionné au plus près de la hanche du porteur et situé naturellement sous son coude. La fatigue du porteur s'en trouve réduite du fait que dans la majorité des mouvements, le bras du porteur peut reposer le long du corps du porteur, au droit du soufflet.

En dépit de la deuxième raideur plus grande, il est possible toutefois, occasionnellement, de forcer le pivotement du corps de ventilateur en écartant vers l'extérieur le bras manipulant la tuyère au moyen d'un effort supplémentaire de façon à diriger le flux d'air dans des positions extrêmes vers l'arrière du porteur ou au niveau de ses pieds. La maniabilité et le champ d'action du flux d'air sont ainsi grandement améliorés tout en limitant les efforts de la part du porteur. La deuxième raideur de rappel a pour effet de repositionner rapidement vers sa position de repos l'ensemple du corps de ventilateur lorsque le bras revient dans sa position naturelle le long du corps du porteur.

En outre, comme la première raideur spinale du soufflet élastique est proportionnellement plus falble, l'actionnement de la tuyère par le porteur s'en trouve facilitée pour une large gamme angulaire de déflection.

Dans la position de repos, c'est-à-dire lorsque le porteur n'exerce aucune action sur la tuyère, l'axe de sortie d'air du corps de ventilateur peut former, avec le plan spinal, un angle compris de préférence entre -25 degrés d'angle et +25 degrés d'angle. L'angle considéré est un angle dont le sommet est situé à l'arriére du plan dorsal.

Selon une possibilité de réalisation particulière de l'articulation à effet de rappel, celle-ci peut être pourvue d'une chamière agencée selon un axe d'articulation.

L'axe d'articulation n'est pas nécessairement parallèle à l'axe spinal. Plus précisément, et selon un mode de réalisation préféré, l'axe d'articulation peut être incliné par rapport à l'axe spinal, l'inclinaison étant comprise entre 5 et 45 degrés d'angle.

Le sommet de l'angle d'inclinaison considéré est situé au-dessus de l'articulation dans une position d'utilisation de l'équipement de souffleur.

L'inclunaison peut, dans ce cas, être mise à profit pour que la masse du souffleur soit mise à contribution dans la composante de rappel parallèlement à l'axe spinal. L'inclinaison par rapport à l'axe spinal peut être décomposée selon le plan dorsal et le plan spinal.

Ainsi, l'axe d'articulation peut présenter une inclinaison convergente par rapport à au moins l'un parmi le plan dorsal et le plan spinal. On considère que l'inclinaison est convergente lorsqu'elle converge en direction de la tête d'un porteur du hamais, lorsque le hamais est porté.

L'angle d'inclinaison de l'axe d'articulation par rapport au plan dorsal peut être compris, de préférence, entre 20 et 45 degrés d'angles tandis que l'angle d'inclinaison par rapport au plan spinal peut être compris, de préférence, entre 5 et 40 degrés d'angle. Les angle considérés sont des angles dont le sommet est situé au-dessus de l'articulation, dans la position d'utilisation de l'équipement de souffleur.

Il convient de préciser que l'articulation à effet de rappel n'est pas nécessairement une articulation à chamiére. Il peut s'agir en effet d'une articulation sous la forme d'un bloc de matière souple et élastique, comparable à un Silentbloc. Dans ce cas, l'articulation présente une composante de rappel parallèlement à l'axe spinal avec la deuxième raideur spinale, mais peut également présenter une raideur, différente ou non, selon d'autres axes d'articulation.

Comme indiqué précédemment, le poids du souffleur peut contribuer au couple de rappel, notamment lorsque l'articulation est une articulation avec une charnière inclinée convergente. En effet, et selon une exécution préférée du souffleur, un centre de gravité du souffleur est situé à l'avant de la fixation de souffleur en direction de la tuyère.

Cette disposition favorise le retour du souffleur dans la position de repos sous l'effet de son propre poids.

Toutefois, l'articulation à effet de rappel peut aussi comporter un ressort de rappel. La raideur de ce ressort peut constituer ou participer à la deuxième raideur spinale, c'est-â-dire à la raideur de l'articulation dans sa composante spinale.

L'articulation peut en outre comporter un frein choisi parmi un frein à friction autour de l'axe d'articulation, un cliquet à friction, une indexation à friction et un frein d'accouplement élastique.

On entend par cliquet à friction un dispositif de frein axialement anisotrope présentant un sens à friction plus élevé et un sens à friction plus faible sur une même piage angulaire.

On entend par indexation à friction un dispositif de frein axialement anisotrope présentant une alternance de plages angulaires avec un coefficient de friction plus élevé et de plages angulaires avec un coefficient de friction plus faible. On entend par frein d'accouplement élastique un frein présentant outre un effet de friction un effet de rappel élastique contribuant à la raideur de l'articulation dans sa composante spinale.

De manière avantageuse, la fixation latérale de souffleur peut être une fixation amovible, sans outil. On considère que la fixation est amovible sans outil lors qu'elle est pourvue d'un organe de fixation pouvant être actionné à la main et permettant au porteur de mettre en place le souffleur sur l'armature de portage et de retirer le souffleur de l'armature de portage sans utiliser d'outil. Un tel organe de fixation peut comporter un emboîtement à complémentarité de forme ou un vissage pourvu d'une molette actionnable à la main, par exemple.

Par ailleurs, la fixation de souffleur peut être configurée de manière à présenter plusieurs positions de fixation sur l'armature de portage, correspondant à différentes positions latérales de l'axe d'articulation et/ou différentes inclinaisons de l'axe d'articulation de la charnière. On entend par différentes positions latérales de l'axe d'articulation des positions présentant un écartement plus ou moins grand par rapport au plan spinal ou présentant différentes hauteurs sur l'armature de portage.

L'armature peut comporter, par exemple une pluralité de glissières à emboîtement ou une pluralité d'embases de vissage pour la fixation de souffleur.

La possibilité de changer l'inclinaison de l'axe de la chamière permet de modifier à la fois la position relative du souffleur par rapport au hamais et par rapport à l'armature de portage du hamais. La contribution du poids du souffleur dans la force de rappel exercée par l'articulation s'en trouve modifiée. En effet, le degré d'inclinaison de l'axe d'articulation par rapport à l'axe spinal change la composante du couple de rappel exercé selon l'axe spinal et donc la deuxième raideur spinale de l'articulation à effet de rappel.

La position latérale du souffleur, conjuguée à la faculté d'adapter la raideur de rappel procure ainsi une adaptation facile du souffleur à un porteur et à sa corpulence.

L'équipement de souffleur peut également comporter une batterie électrique pour une alimentation en énergie du souffleur, la batterie électrique étant fixée sur l'armature de portage du hamais de portage.

La présence d'une batterie ou pour le moins d'un emplacement pour batterie est souhaltable lorsque le ventilateur est un ventilateur à moteur électrique.

De manière à faciliter l'orientation de la tuyère devant le porteur, tout ou partie du souffleur peut être porté latéralement en longeant le flanc du porteur. Ce port du souffleur résulte de la fixation latérale du souffleur sur l'armature de portage.

De manière avantageuse, la batterie électrique peut présenter un centre de gravité décalé par rapport au plan spinal, à l'opposé du corps de ventilateur. Le décalage de la batterie à l'opposé du corps de ventilateur, et plus généralement à l'opposé du souffleur permet de répartir et d'équilibrer le poids des charges sur l'armature de portage.

En particuller l'amplitude du décalage de la batterie par rapport au plan spinal peut être déterminée en fonction des poids de la batterie et du souffleur, de manière que le centre de gravité de l'équipement de souffleur pris dans son ensemble soit situé sur le plan spinal ou le plus près possible du plan spinal.

L'équipement de souffleur peut comporter en outre au moins une entrave de limitation d'un débattement angulaire du corps de ventilateur, l'entrave comprenant au moins l'un parmi une butée et une sangle. La sangle peut être élastique ou non. La butée et la sangle peuvent être disposées, par exemple, entre le corps de ventilateur et l'armature de portage. Des butées de limitation d'amplitude de débattement peuvent également être prévues sur l'articulation de la fixation de souffleur.

La limitation d'un débattement angulaire du corps de ventilateur peut être mise à profit pour éviter des positions inconfortables ou dangereuses du souffleur pour le porteur. Elle permet également de garantir une bonne transmission des forces de rappel de soufflage sur l'armature de portage.

D'autres caractéristiques et avantages de l'invention ressortent de la description qui suit, en référence aux figures des dessins. Cette description est donnée à titre illustratif et non limitatif.

### Brève description des figures

La figure 1 est une perspective schématique en plongée sur un porteur dans une position d'utilisation d'un équipement de souffleur conforme à l'invetion.
La figure 2 est une perspective arrière partielle du porteur de la figure 1, le souffleur étant dans une position de repos.
La figure 3 est une perspective comparable à celle de la figure 2, sur laquelle une batterie de l'équipement de souffleur a été retirée.
La figure 4 est une vue schématique de dessus d'un porteur avec un équipement de souffleur comparable à celui de la figure 1, dans une position de repos.
Les figures 5 et 6 sont des vues de dessus du porteur avec l'équipement de souffleur de la figure 4, et illustrent des mouvements de balayage.
Les figures 7 et 8 sont des vues de dessus d'un porteur avec l'équipement de souffleur de la figure 4 et illustrent des mouvements de balayage dans des positions extrêmes, le bras du porteur étant alors écarté avec efforts à distance du corps du porteur.
La figure 9 est une coupe schématique d'une armature de portage d'un équipement selon l'invention passant par axe d'articulation d'une fixation latérale de souffleur d'un équipement conforme aux figures précédentes.
La figure 10 est une coupe schématique, perpendiculairement à son axe, d'un frein et plus préciément d'un frein à cliquet susceptible d'équiper une articulation de l'équipement de souffleur.

Les figures sont exécutées de manière schématique et en échelle libre.

### Description détaillée de modes de mise en œuvre de l'invention

Dans la description qui suit, des parties identiques ou similaires des différentes figures sont repérées avec les mêmes signes de référence.

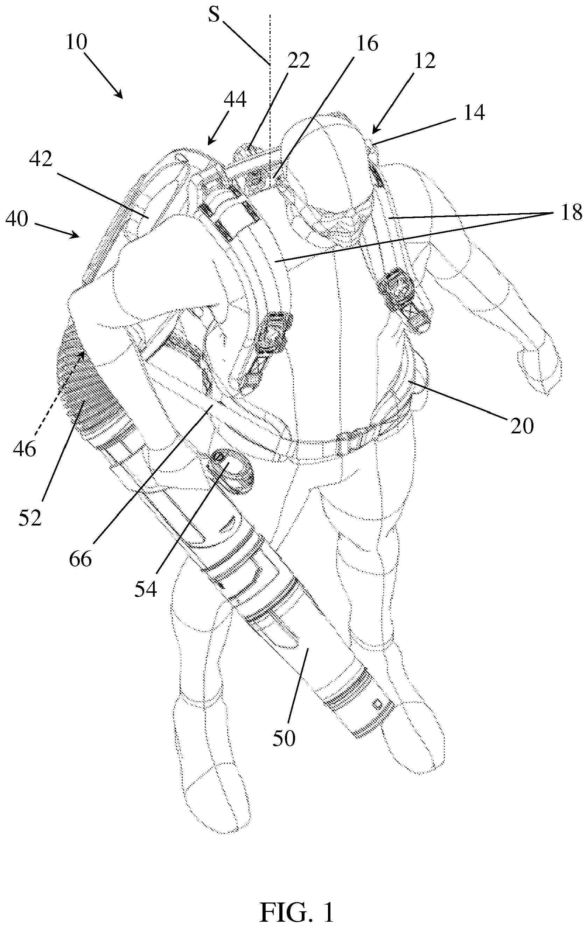

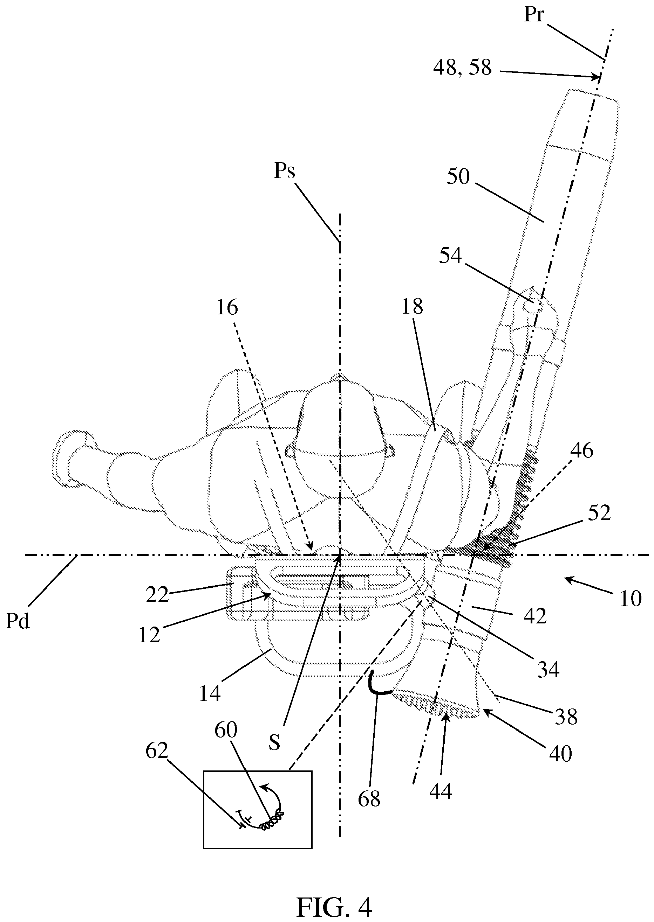

L'équipement de souffleur 10 visible sur les figures 1 à 8 comprend un hamais de portage 12 pourvu d'une armature de portage 14 avec une plage d'appui dorsale 16. La plage d'appui dorsale 16 vient en appui sur le dos d'un porteur et s'étend selon un plan dorsal Pd représenté sur les figures 4 à 8.

La position des éléments de l'équipement de souffleur sont définis essentiellement par rapport au plan dorsal Pd, mais aussi par rapport à un plan spinal Ps, perpendiculaire au plan dorsal et passant par la colonne vertébrale du porteur, et par rapport à un axe spinal S défini par l'intersection du plan dorsal Pd et du plan spinal Ps.

Le hamais 12 est pourvu de brettelles 18 et d'une ceinture 20, permettant sa fixation au corps du porteur.

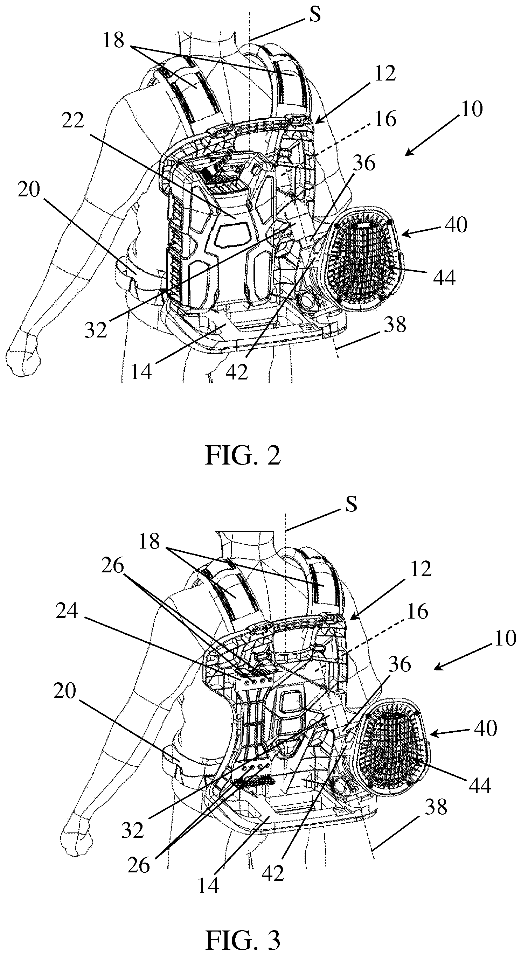

Une batterie 22 d'alimentation électrique est solidaire de l'armature 14 par l'intermédiaire d'une interface de fixation visible à la figure 3. Elle se présente, par exemple, sous la forme d'une platine de fixation 24.

La platine de fixation 24 est fixée de façon réglable sur l'armature de portage 14 par l'intermédiaire de fixations 26. Ceci permet de déporter latéralment, la batterie, selon des posittions discrétes par système de vis-écrou (non détaillé sur la figure 3). Le réglage latéral de la position de la batterie peut également être un réglage continu en montant la platine de fixation 24 sur un rall de fixation, par exemple. Le déport de la batterie s'entend par rapport au plan spinal Ps comme le montrent notamment les figures 4 à 8, de sorte que le poids de la batterie équilibre celui d'un souffleur 40 porté sur un côte opposé de l'armature de portage 14, par rapport au plan spinal Ps.

Comme indiqué ci-dessus, la fixation est configurée de préférence de manière à autoriser un réglage latéral de la position de la batterie. Ainsi, compte tenu des poids relatifs de la batterie 22 et du souffleur 40, et en ajustant la position latérale de la batterie, il est possible de déplacer le centre de gravité de l'équipement de souffleur 10 afin de le rapprocher le plus possible du plan spinal Ps. De préférence le centre de gravité de l'équipement de souffleur 10 est situé sur le plan spinal Ps.

Comme le montrent les figures 2 et 3, une fixation de souffleur 32 relie le souffleur 40 à l'armature de portage 14. Plus précisément, la fixation de souffleur relie une partie arrière du souffleur, en l'occurence un corps de ventilateur 42 du souffleur 40 à l'armature de portage 14. Ainsi le centre de gravité du souffleur 40 est situé à l'avant de l'emplacement de la fixation de souffleur, en direction d'une sortie d'air.

La fixation de souffleur 32 est un organe comprenant une articulation à effet de rappel 34, pourvue d'une charnière 36 agencée selon un axe d'articulation 38. L'axe d'articulation 38 présente une inclinaison par rapport à l'axe spinal S. Il présente également une inclinaison par rapport au plan dorsal Pd et par rapport au plan spinal Ps comme le montrent les figures 4 à 8. L'angle par rapport au plan dorsal est compris de préférence entre 20 et 45 degrés d'angle tandis que l'angle par rapport au plan spinal est compris de préférence entre 5 et 40 degrés d'angle. Des angles d'inclinaisons dans ces gammes permettent d'optisier à la fols les forces de rappel et le confort du porteur, notamment lors d'une utilisation prolongée de l'équipement de souffleur.

Le corps de ventilateur 42 est équipé d'un ventilateur à moteur électrique alimenté en énergie par la batterie 22. Le corps de ventilateur comprend une entrée d'air 44 et une sortie d'air 46. Comme le montrent les figures 1 et 4, le corps de ventilateur se présente sous forme d'un tronçon du souffleur droit, de sorte que l'entrée d'air 44 et la sortie d'air 46 sont coaxiales. L'entrée et la sortie d'air peuvent également ne pas être coaxiales mais cela augmente alors les pertes de charge du flux d'air dans le corps de ventilateur.

La sortie d'air 46 est agencée selon un axe 48 de sortie d'air. Une tuyère 50 est connectée à la sortie d'air 46 par l'intermédiaire d'un soufflet élastique 52. La tuyère présente sur le dessus une poignée 54, tenue à la main par le porteur et permettant au porteur d'orienter la tuyère.

En l'absence d'une action sur la poignée 54 la tuyère, et plus généralement le souffleur, se trouvent dans une position de repos illustrée à la figure 4. Un axe 58 de la tuyère et l'axe 48 de la sortie d'air 46 du corps de ventilateur se trouvent alors dans un même plan de repos Pr.

Le plan de repos Pr peut être parallèle au plan spinal Ps, ou peut former par rapport à ce plan un angle de préférence inférieur à +/- 25 degrés d'angle. Le plan de repos Pr est situé de préférence proche de la hanche du porteur.

La porteur peut effectuer des balayages horizontaux avec la tuyère en exerçant un effort sur la poignée 54 par un mouvement de pivotement de l'avant-bras. Ces balayages horizontaux ont principalement pour effet de déformer le soufflet 52, c'est-à-dire de défléchir l'axe de tuyère 58 par rapport à l'axe de sortie d'air 48 du corps de ventilateur. De manière secondaire, et notamment lorsque le porteur exerce un effort plus important sur la poignée 54 par des mouvements combinés du bras et de l'avant-bras, le balayage horizontal s'accompagne également d'une déflexion de l'axe de sortie d'air 48 par rapport au plan de repos Pr.

Différentes positions angulaires sont représentées schématiquement dans les figures 4 à 8.

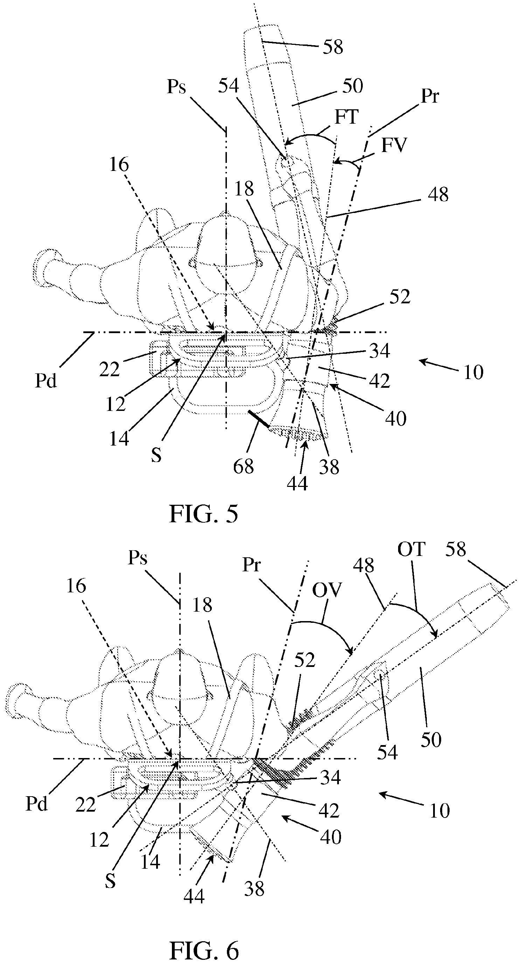

Des positions de balayage de part et d'autre du plan de repos Pr sont illustrées par les figures 5 et 6.

Dans la suite de la description on distingue un balayage dit de fermeture lorsque l'extrémité de la tuyère se déplace dans un mouvement orienté du plan de repos Pr vers le plan spinal Ps, et un balayage dit d'ouverture lorsque l'extrémité de la tuyère se déplace dans un mouvement orienté du plan spinal vers le plan de repos Pr, et au-delà du plan de repos Pr. Les balayages s'entendent comme des balayages horizontaux tout en pouvant comprendre des mouvements verticaux lors du balayage.

Le balayage de fermeture se caractérise par un angle de fermeture FT de la tuyère. Il s'agit d'un angle mesuré entre l'axe de sortie d'air 48 du corps de ventilateur 42 et l'axe 58 de la tuyère 50. Eventuellement, le balayage de fermeture peut en outre se caractériser par un angle de fermeture FV du corps de ventilateur. L'angle de fermeture FV du corps de ventilateur est mesuré entre le plan de repos Pr et l'axe de sortie d'air 48 du corps de ventilateur 42. On peut noter que l'angle de fermeture du corps de ventilateur peut être limité à une valeur nulle, par une butée ou une sangle, de la manière décrite plus loin.

Inversement le balayage d'ouverture se caractérise par un angle d'ouverture OT de la tuyère par rapport à l'axe de sortie d'air, combiné éventuellement avec un angle d'ouverture OV du corps de ventilateur par rapport au plan de repos Pr.

Dans l'exemple de réalisation de la figure 5, l'axe de sortie d'air 48 du ventilateur s'écarte du plan Pr d'un angle FV lorsque la tuyère effectue un balayage de fermeture. La valeur de l'angle FV peut être limitée par une entrave de l'équipement de souffleur. L'entrave peut être constituée par une butée formée, par exemple, par une partie de la ceinture 20 du hamais de portage s'étendant sur la hanche du porteur. Cette partie de la ceinture 20 est visible sur la figure 1. La valeur de l'angle de fermeture FV du corps de ventilateur peut également limitée par une entrave sous la forme d'une sangle 68, comme le montrent les figures 4 et 5. La sangle 68, représentée schématiquement est de préférence une sangle non élastique. Elle relie le souffleur 40 à l'armature de portage 14 à l'arrière du plan dorsal Pd. La sangle 68 peut être fixée sur le souffleur au voisinage de son entrée d'air 44.

Lors d'un balayage d'ouverture, comme illustré sur la figure 6, le corps de ventilateur suit la déflexion de la tuyère avec un angle d'ouverture de corps de ventilateur OV inférieur ou égal à l'angle d'ouverture de tuyère OT. L'angle d'ouverture de ventilateur peut également être limité par une etrave définissant une d'ouverture maximale. Cette entrave peut être réalisée sous la forme d'une sangle 66 visible sur la figure 1. La sangle 66 relie le corps de ventilateur 42 à la ceinture 20 du hamais de portage. La sangle 66 peut être élastique. L'entrave peut aussi être définie par l'interaction entre une forme du corps de ventilateur, par exemple l'entrée d'air 44, arrivant en butée sur une forme de l'armature de portage 14 en arrière du plan dorsal.

On désigne par "déphasage" la tendance du corps de ventilateur de suivre le mouvement de la tuyère dans des mouvements de balayage horizontaux, avec une plus faible amplitude d'ouverture ou de fermeture et éventuellement avec un retard par rapport aux mouvements de la tuyère. Un éventuel retard peut être dû à un effet de seuil qui fait qu'un mouvement de corps de ventilateur exige de dépasser un certain effort de flexion sur le soufflet 52 de la tuyère 50.

Le déphasage ou la différence d'amplitude de déflexion est essentiellement dû à une raideur de rappel de l'articulation à effet de rappel 34 plus grande que la raideur du soufflet élastique 52.

La raideur de rappel à laquelle il est fait référence ici est une composante de la raideur de rappel paralléle à l'axe spinal. En d'autres termes, et comme indiqué précédemment, une deuxième raideur de rappel spinale de l'articulation à effet de rappel 34 est supérieure à une première raideur de rappel spinale du soufflet élastique.

Comme évoqué précédemment, un effet de rappel est obtenu en raison de l'inclinaison de l'axe d'articulation 38, de sorte que le poids du souffleur, a tendance à ramener spontanément le souffleur dans le plan de repos Pr.

L'effet de rappel peut être accentué, ou au contraire freiné, en équipant l'articulation à effet de rappel d'un ressort de rappel 60 ou d'un frein 62 agencés autour de l'axe d'articulation 38 et exerçant des couples de rappel ou de freiage selon cet axe. Le frein 62 peut notamment être un frein à friction ou un cliquet à friction. Un frein à accouplement élastique peut combiner les effets du ressort et du frein. Le ressort de rappel 60 et le frein 62 sont indiqués symboliquement sur la figure 4.

La raideur du rappel, et en particulier la deuxième raideur de rappel spinale, peut être modifiée, soit en agissant sur la raideur du ressort de rappel 60, si un tel ressort est prévu, mais aussi en agissant sur l'inclinaison de l'axe d'articulation 38. Cette inclinaison est fixe dans l'exemple de réalisation des figures 1 à 8. Elle peut également être prévue réglable avec des positions discrètes ou continues des liaisons entre la fixation latérale de souffleur 32 et l'armature de portage 14, permettant d'ajuster notamment l'inclinaison de l'axe d'articulation 38.

Il convient de noter que le porteur de l'équipement de souffleur peut également effectuer des balyages verticaux, c'est-à-dire déplacer la tuyère parallélement à un plan vertical, c'est-à-dire un plan contenant l'axe spinal S. Le soufflet élastique 52 exerce également à l'encontre du balayage vertical une force de rappel tendant à ramener la tuyère vers une position de repos dans laquelle l'axe de tuyère vers au sol un angle compris entre 20 et 60 degrés d'angle.

Les figures 5 et 6 sont des figures illustrant des mouvements standards de balayage "horizontaux" effectuées avec un équipement de souffleur selon l'invention, autour d'une position de repos illustrée par la figure 4. Ces mouvements sont les mouvements les plus frequents lors de l'utilisation de l'équipement. Lors de ces mouvements, d'amplitude modérés, l'essentiel de la déflexion de la tuyère 50 est obtenue par flexion du soufflet 52, avec éventuellement un accompagnement de plus faible amplitude du mouvement du corps de ventilateur autour de l'axe d'articulation 38 de l'articulation 34 de la fixation 32 du souffleur sur l'armature de protage 14. Ces mouvements de la tuyère ont un débattement angulaire FT+FV avec FT >= FV lorsque le mouvement est un mouvement de fermeture (figure 5), et un débattement angulaire OT+OV avec OT >= OV lorsque le mouvement est un mouvement d'ouverture (figure 6). Le mouvement de rotation autour de l'axe d'articulation 38 et la déflexion se font dans le même sens, dans un balayage en fermeture ou en ouverture.

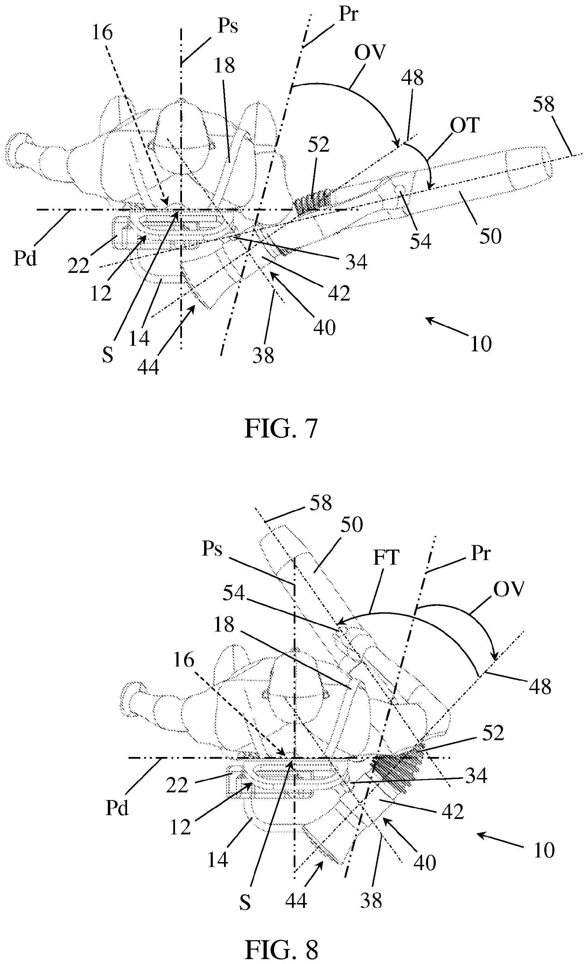

Par contraste, les figures 7 et 8 montrent des mouvements exceptionnels, lors desquels l'utilisateur impose au souffleur une amplitude de rotation plus importante autour de l'axe d'articulation 38 de la fixation de souffleur 32 pour provoquer un angle d'ouverture ou un angle de fermeture plus important du corps de ventilateur 42 par rapport à position de repos dans le plan de repos Pr, ou pour provoquer des mouvements antagonistes du corps de ventilateur et de la tuyère.

Dans le cas de la figure 8 le mouvement de la tuyère 50 et celle du corps de ventilateur 42 sont antagonistes. En effet, le corps de ventilateur 42 effectue un mouvement d'ouverture avec un angle d'ouverture OV important et la tuyère 50 effectue un mouvement de fermeture avec un angle de fermeture FT également important.

Dans le cas de la figure 7, le corps de ventilateur 42 et la tuyère 50 effectuent un mouvement d'ouverture avec un angle d'ouverture égal à OT+OV. On note cependant que l'angle d'ouverture du corps de ventilateur OV est ici très supérieur à l'angle d'ouverture de la tuyère OT, contrairement à ce qui se passe lors des mouvements standards.

On peut noter que le porteur de l'équipement de souffleur a son coude positionné proche de son tronc lors des mouvements standards décrits en référence aux figures 5 et 6. C'est essentiellement l'avant-bras qui se déplace et exerce sur la poignée les forces de déflexion angulaires nécessaires au balayage. Par contraste, pour les mouvements exceptionnels des figures 7 et 8, on peut noter que le coude de l'utilisateur est écarté du tronc. Le porteur utilise alors sons bras en plus de sa main positionnée sur la poignée pour exercer des forces avec des composantes parallèles à l'axe de tuyère 58 ou parallèles à l'axe de sortie d'air 48 du corps de ventilateur pour contraindre les mouvements autour de l'axe d'articulation 38 de la chamière 36 formant la fixation du souffleur.

Compts tenu de la deuxième raideur de rappel spinale supérieure à la premiére raideur de rappel spinale, les efforts engagés pour ouvrir l'axe de sortie d'air 48 sont plus importants, mais évitent par là même des ouvertures intempestives du corps de ventilateur dues à son poids, et donc à déstabiliser le porteur lorsque le porteur se penche du côte du souffleur par exemple.

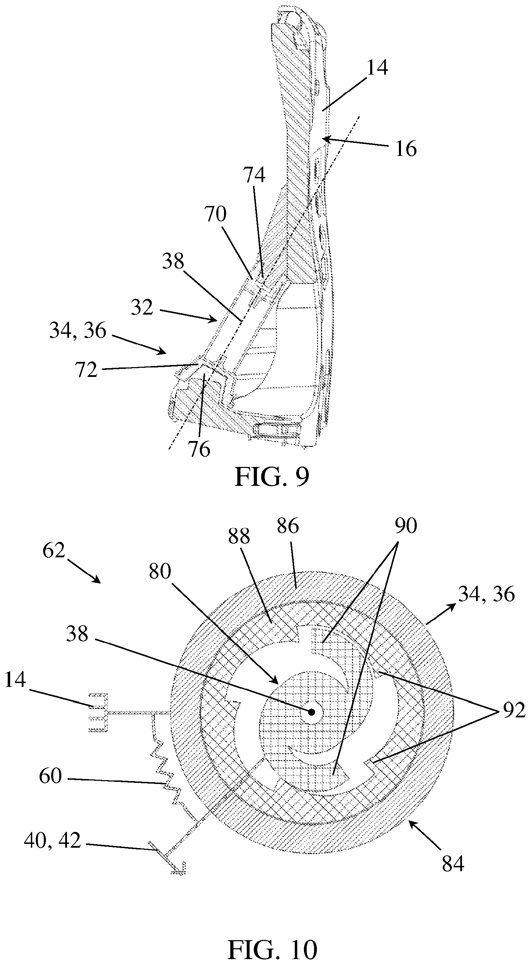

La figure 9 montre une coupe de l'armature de portage 14 du hamais de portage selon un plan de coups sensibiement perpendiculaire au plan dorsal Pd et passant par l'axe d'articulation 38 de l'articulation à effet de rappel 34 de la fixation latérale de souffleur 32.

La charnière 36 de l'articulation à effet de rappel 34 présente une partie mobile avec des extrémités coniques 70,72 reçues sur des embases 74, 76 solidaires de l'armature de portage 14. Les embases 74, 76 sont également coniques et de forme respectivement complémentaire aux extrémités coniques 70, 72 de la partie mobile l'articulation 34.

La friction mutuelles des parties coniques emboîtées permet de constituer un frein avec un effet de freinage relatif s'opposant à la rotation libre autour de l'axe d'articulation 36.

La figure 10 montre à plus grande échelle une autre possibilité de réalisation d'un frein 62 susceptible d'équiper la chamière de l'articulation à effet de rappel 34. Le cliquet à friction comprend un rotor 80 solidaire du souffleur 40, et plus preécisément du corps de ventilateur 42, et un stator 84 solidaire de l'armature de portage 14. Le stator 64 est pourvu d'un carter 86 et d'une couronne de friction 88 présentant par rapport au carter une liberté de rotation autour de l'axe d'articulation 38 de la chamière avec un premier coefficient de friction. Le rotor, présente également une liberté de rotation autour de l'axe d'articulation 38 de la chamière. Il est pourvu de cliquets 90 complémentaires d'une denture interne 92 de la couronne de friction. Larotation du rotor par rapport à la couronne de friction 88 n'est possible que dans un seul sens de rotation. Une rotation dans un sens inverse est interdite par une interation entre les cliquets 90 et la denture 92 de la couronne de friction. Dans ce cas, seuie une rotation entre la couronne de friction 88 et le carter 86 reste possible. Dans le sens rotation autorisé par les cliquets 90 et la danture 92, une interation entre les cliquets 90 et la couronne de friction 88 autorise une rotation autour de l'axe 38 un deuxième coefficient de friction inférieur au premier coefficient de friction. Ainsi le frein 62 de la chamière présente une anisotropie avec un premier coefficient de friction dans un premier sens de pivotement du souffleur et un deuxième coefficient de friction, différent du premier coefficient de friction dans un deuxième sens de pivotement du souffleur, opposé au premier sens de pivotement. Le coefficient de friction le plus bas peut être associé aux mouvements de balayage de fermeture, et le coefficient de fiction plus élevé peut être associé aux mouvements de balayage d'ouverture.

Un effet de rappel supplémentaire, s'ajoutant, le cas échéant, à celui résultant de l'inclinaison de l'axe d'articulation 38, est foumi par le ressort de rappel 60 indiqué symboliquement. Il participe ainsi à la deuxième raideur de rappel spinale évoquée précédemment.

## Revendications

1. Equipement de souffleur (10) comprenant :
- un hamais de portage (12) pourvu d'une armature de portage (14) avec une plage d'appui dorsale (16) agencée selon un plan dorsal (Pd), le plan dorsal s'étendant de manière adjacente au dos d'un porteur lorsque le hamais est porté au dos dans une position d'utilisation de l'équipement de souffleur,
- au moins une fixation de souffleur (32) latérale,
- un souffleur (40) solidaire de l'armature de portage (14) par l'intermédiaire de la fixation de souffleur (32), et comprenant un corps de ventilateur 942) avec une sortie d'air (46) agencée selon un axe de sortie d'air (48), le souffleur comportant une tyère (50), connectée en aval de la sortie d'air (46) par l'intermédiaire d'un soufflet élastique (52) à effet de rappel, le soufflet élastique présentant une composante de rappel, paralièlement à un axe spinal (S), avec une première raideur de rappel spinale, l'axe spinal (S) étant défini à une intersection du plan dorsal (Pd) et d'un plan spinal (Ps) perpendiculaire au plan dorsal et passant par la colonne vertébrale d'un porteur lorsque le hamais est porté au dos dans la position d'utilisation,
**caractérisé en ce que** :
- la fixation de souffleur (32) comprend une articulation (34) à effet de rappel, tendant à ramener l'axe (48) de sortie d'air de la sortie l'articulation présentant une composante de rappel, parallèlement à l'axe spinal (S), avec une deuxième raideur de rappel spinale, la deuxième raideur de rappel spinale étant supérieure à la première raideur de rappel spinale.

2. Equipement selon la revendication 1, dans lequel l'articulation (34) à effet de rappel est une articulation pourvue d'une charnière (36) agencée selon un axe d'articulation (38).

3. Equipement selon la revendication 2, dans lequel l'axe d'articulation (38) est incliné par rapport à l'axe spinal (S) l'inclinaison étant comprise entre 5 et 45 degrés d'angle.

4. Equipement selon l'une quelconque des revendications 2 ou 3, dans lequel l'axe d'articulation (38) présente une inclinaison convergente par rapport à au moins l'un parmi le plan dorsal (Pd) et le plan spinal (Ps).

5. Equipement selon la revendication 4, dans lequel l'angle d'inclinaison de l'axe d'articulation par rapport au plan dorsal est comprise entre 20 et 45 degrés d'angles et dans lequel l'angle d'inclinaison par rapport au plan spinal est compris entre 5 et 40 degrés d'angle.

6. Equipement selon l'une quelconque des revendications précédentes, dans lequel l'articulation à effet de rappel (34) comprend un ressort de rappel (60).

7. Equipement selon l'une quelconque des revendications 2 à 6, dans lequel l'articulation comprend un frein (62) choisi parmi un frein à friction autour de l'axe d'articulation, un cliquet à friction, une iridexation à friction et un frein d'accouplement élastique.

8. Equípement selon la revendication 1, comportant au moins une entrave de limitation d'un débattement angulaire du corps de ventilateur (42), l'entrave comprenant au moins l'un parmi une butée et une sangle (66, 68).

9. Equipement selon l'une quelconque des revendications précédentes, dans lequel la fixation de souffleur est une fixation amovible, sans outil.

10. Equipement selon l'une quelconque des revendications précédentes, comprenant une batterie électrique (22) pour une alimentation en énergie du souffleur, la batterie électrique étant fixée sur l'armature de portage (14) du hamais de portage (12).

11. Equipement selon la revendication 10, dans lequel la batterie électrique présente un centre de gravité décalé par rapport au plan spinal, à l'opposé du corps de ventilateur.

12. Equipement selon l'une quelconque des revendications précédentes, dans lequel l'axe de sortie d'air (48) du souffleur forme avec le plan spinal (Ps), un angle compris entre -25 degrés d'angle et +25 degrés d'angle, dans la position de repos.

13. Equipement selon l'une quelconque des revendications précédentes, dans lequel la tuyère (50) présente une extrémité proximale fixée au soufflet (52) et une extrémité distale libre, l'extrémité proximale étant pourvue d'une poignée (54).

14. Equipement selon l'une quelconque des revendications précédentes, dans lequel un centre de gravité du souffleur (40) est situé à l'avant de la fixation de souffleur (32) en direction de la tuyère.

## Patentansprüche

1. Bläserausrüstung (10), umfassend:
- ein Tragegeschirr (12), das mit einem Tragegestell (14) mit einem dorsalen Auflagebereich (16) versehen ist, der entlang einer Dorsalebene (Pd) eingerichtet ist, wobei sich die Dorsalebene, wenn das Geschirr in einer Gebrauchsstellung der Bläserausrüstung auf dem Rücken getragen wird, an den Rücken eines Trägers angrenzend erstreckt,
- mindestens eine seitliche Bläserbefestigung (32),
- einen Bläser (40), der mittels der Bläserbefestigung (32) fest mit dem Tragegestell (14) verbunden ist und einen Gebläsekörper (42) mit einem Luftauslass (46) umfasst, der entlang einer Luftauslassachse (48) eingerichtet ist, wobei der Bläser eine Düse (50) umfasst, die mittels eines elastischen Balgs (52) mit Rückstellwirkung stromabwärts des Luftauslasses (46) angeschlossen ist, wobei der elastische Balg parallel zu einer Spinalachse (S) eine Rückstellkomponente mit einer ersten Federkonstante zur spinalen Rückstellung aufweist, wobei die Spinalachse (S) an einem Schnittpunkt der Dorsalebene (Pd) und einer Spinalebene (Ps), die senkrecht zur Dorsalebene steht und durch die Wirbelsäule eines Trägers verläuft, wenn das Geschirr in der Gebrauchsstellung auf dem Rücken getragen wird, definiert ist,
**dadurch gekennzeichnet, dass**:
- die Bläserbefestigung (32) ein Gelenk (34) mit Rückstellwirkung umfasst, das dazu neigt, die Luftauslassachse (48) des Luftauslasses (46) des Gebläsekörpers (42) in Richtung einer Ruhestellung zurückzubringen, wobei das Gelenk parallel zur Spinalachse (S) eine Rückstellkomponente mit einer zweiten Federkonstante zur spinalen Rückstellung aufweist, wobei die zweite Federkonstante zur spinalen Rückstellung größer ist als die erste Federkonstante zur spinalen Rückstellung.

2. Ausrüstung nach Anspruch 1, wobei es sich bei dem Gelenk (34) mit Rückstellwirkung um ein Gelenk handelt, das mit einem Scharnier (36) versehen ist, welches entlang einer Gelenkachse (38) eingerichtet ist.

3. Ausrüstung nach Anspruch 2, wobei die Gelenkachse (38) in Bezug auf die Spinalachse (S) geneigt ist, wobei die Neigung im Bereich zwischen 5 und 45 Winkelgrad liegt.

4. Ausrüstung nach einem der Ansprüche 2 oder 3, wobei die Gelenkachse (38) eine in Bezug auf mindestens eine aus der Dorsalebene (Pd) und der Spinalebene (Ps) konvergente Neigung aufweist.

5. Ausrüstung nach Anspruch 4, wobei der Neigungswinkel der Gelenkachse in Bezug auf die Dorsalebene im Bereich zwischen 20 und 45 Winkelgrad liegt, und wobei der Neigungswinkel in Bezug auf die Spinalebene im Bereich zwischen 5 und 40 Winkelgrad liegt.

6. Ausrüstung nach einem der vorstehenden Ansprüche, wobei das Gelenk mit Rückstellwirkung (34) eine Rückstellfeder (60) umfasst.

7. Ausrüstung nach einem der Ansprüche 2 bis 6, wobei das Gelenk eine Bremse (62) umfasst, ausgewählt aus einer Reibbremse um die Gelenkachse herum, einer Reibklinke, einer Reibbindung und einer elastischen Kupplungsbremse.

8. Ausrüstung nach Anspruch 1, die mindestens ein Hindernis zur Begrenzung eines Winkelausschlags des Gebläsekörpers (42) umfasst, wobei das Hindernis mindestens eines aus einem Anschlag und einem Riemen (66, 68) umfasst.

9. Ausrüstung nach einem der vorstehenden Ansprüche, wobei es sich bei der Bläserbefestigung um eine ohne Werkzeug lösbare Befestigung handelt.

10. Ausrüstung nach einem der vorstehenden Ansprüche, die eine elektrische Batterie (22) zur Energieversorgung des Bläsers umfasst, wobei die elektrische Batterie am Tragegestell (14) des Tragegeschirrs (12) befestigt ist.

11. Ausrüstung nach Anspruch 10, wobei die elektrische Batterie einen in Bezug auf die Spinalebene versetzten Schwerpunkt aufweist, der dem Gebläsekörper gegenüberliegt.

12. Ausrüstung nach einem der vorstehenden Ansprüche, wobei die Luftauslassachse (48) des Bläsers in der Ruhestellung einen Winkel im Bereich zwischen -25 Winkelgrad und +25 Winkelgrad zur Spinalebene (Ps) bildet.

13. Ausrüstung nach einem der vorstehenden Ansprüche, wobei die Düse (50) ein proximales Ende, das am Balg (52) befestigt ist, und ein freies distales Ende aufweist, wobei das proximale Ende mit einem Griff (54) versehen ist.

14. Ausrüstung nach einem der vorstehenden Ansprüche, wobei sich ein Schwerpunkt des Bläsers (40) vor der Bläserbefestigung (32) in Richtung der Düse befindet.

## Claims

1. A blower equipment (10) comprising:
- a carrying harness (12) provided with a carrying frame (14) with a dorsal bearing area (16) arranged along a dorsal plane (Pd), the dorsal plane extending adjacent to the back of a wearer when the harness is worn on the back in a position of use of the blower equipment,
- at least one lateral blower fastening (32),
- a blower (40) secured to the carrying frame (14) via the blower fastening (32), and comprising a fan body (42) with an air outlet (46) arranged along an air outlet axis (48), the blower including a nozzle (50), which is connected downstream of the air outlet (46) via an elastic return effect bellows (52), the elastic bellows having a return component, parallel to a spinal axis (S), with a first spinal return stiffness, the spinal axis (S) being defined at an intersection of the dorsal plane (Pd) and a spinal plane (Ps) perpendicular to the dorsal plane and passing through the spine of a wearer when the harness is worn on the back in the position of use,
**characterised in that**:
- the blower fastening (32) comprises a return effect joint (34), tending to return the air outlet axis (48) of the air outlet (46) of the fan body (42) to a rest position, the joint having a return component, parallel to the spinal axis (S), with a second spinal return stiffness, the second spinal return stiffness being greater than the first spinal return stiffness.

2. The equipment according to claim 1, wherein the return effect joint (34) is a joint provided with a hinge (36) arranged along a joint axis (38).

3. The equipment according to claim 2, wherein the joint axis (38) is inclined relative to the spinal axis (S), the inclination being comprised between 5 and 45 degrees of angle.

4. The equipment according to one of claims 2 or 3, wherein the joint axis (38) has a convergent inclination relative to at least one from the dorsal plane (Pd) and the spinal plane (Ps).

5. The equipment according to claim 4, wherein the angle of inclination of the joint axis relative to the dorsal plane is comprised between 20 and 45 degrees of angle and wherein the angle of inclination relative to the spinal plane is comprised between 5 and 40 degrees of angle.

6. The equipment according to any one of the preceding claims, wherein the return effect joint (34) comprises a return spring (60).

7. The equipment according to any one of claims 2 to 6, wherein the joint comprises a brake (62) selected from a friction brake about the joint axis, a friction pawl, a friction indexing and an elastic coupling brake.

8. The equipment according to claim 1, including at least one hindrance for limiting an angular movement of the fan body (42), the hindrance comprising at least one from a stop and a strap (66, 68).

9. The equipment according to any one of the preceding claims, wherein the blower fastening is a tool-free removable fastening.

10. The equipment according to any one of the preceding claims, comprising an electric battery (22) for a power supply of the blower, the electric battery being fastened on the carrying frame (14) of the carrying harness (12).

11. The equipment according to claim 10, wherein the electric battery has a centre of gravity offset relative to the spinal plane, opposite to the fan body.

12. The equipment according to any one of the preceding claims, wherein the air outlet axis (48) of the blower forms, with the spinal plane (Ps), an angle comprised between -25 degrees of angle and +25 degrees of angle, in the rest position.

13. The equipment according to any one of the preceding claims, wherein the nozzle (50) has a proximal end which is fastened to the bellows (52) and a free distal end, the proximal end being provided with a handle (54) .

14. The equipment according to any one of the preceding claims, wherein a centre of gravity of the blower (40) is located at the front of the blower fastening (32) in the direction of the nozzle.
